# FASCICULE DE BREVET EUROPEEN

(11) **EP 2 313 288 B1**
(45) Date de publication et mention de la délivrance du brevet: **26.04.2017**
(21) Numéro de dépôt: 09802569.5
(22) Date de dépôt: 08.07.2009
(51) Int. Cl.: B60R 16/03, B60W 10/26, B60W 20/00, H02M 3/156, H02M 7/42

(54) **SYSTEME MICRO-HYBRIDE PREVU POUR ALIMENTER UN RESEAU DE DISTRIBUTION ELECTRIQUE D'UN VEHICULE AUTOMOBILE**
MIKROHYBRIDSYSTEM ZUR ENERGIEVERSORGUNG EINES STROMVERTEILUNGSNETZES EINES FAHRZEUGES
MICRO-HYBRID SYSTEM PROVIDED FOR SUPPLYING POWER TO AN ELECTRICITY DISTRIBUTION NETWORK OF AN AUTOMOBILE

(30) Priorité: 29.07.2008 FR 0855220
(43) Date de publication de la demande: 27.04.2011
(73) Titulaire: Valeo Equipements Electriques Moteur, 94046 Créteil Cedex (FR)
(72) Inventeur: ROUIS, Oussama, F-94000 Creteil (FR); BENCHETRITE, Daniel, F-94000 Creteil (FR); DE VRIES, Arnaud, F-92170 Vanves (FR); MATT, Jean-Claude, F-21000 Dijon (FR)
(86) Numéro de dépôt international: PCT/FR2009/051353
(87) Numéro de publication internationale: WO 2010/012930

(56) Documents cités:
- EP-A- 1 383 233
- WO-A-2008/029244
- GB-A- 2 371 688
- US-A1- 2002 125 871
- US-A1- 2007 288 182

## Description

L'invention concerne un dispositif pour système micro-hybride apte à équiper un véhicule automobile. Ce système micro-hybride est prévu pour alimenter un réseau de distribution électrique du véhicule.

Dans un système conventionnel, une batterie et une machine électrique tournante alimentent des consommateurs électriques via le réseau de distribution électrique du véhicule. Le document WO 2008/029244 A2 décrit un système micro-hybride pour véhicule automobile comportant une machine électrique tournante, au moins un convertisseur de puissance apte à être connecté à un réseau de distribution électrique du véhicule, ce réseau comportant une unité de stockage d'énergie, et un circuit de commande apte à commander le convertisseur de puissance pour fournir un courant d'alimentation au réseau de distribution électrique.

Le document US 2002/0125871 A1 décrit un convertisseur de puissance qui comporte un moyen associé au circuit de commande pour commander, lors d'un changement d'état entre des états de fourniture et de non fourniture du courant d'alimentation au réseau de distribution électrique, une variation au moins partiellement progressive d'une tension de charge délivrée par le convertisseur de puissance de manière à obtenir une variation correspondante d'une tension réseau du réseau de distribution électrique d'une première valeur de tension réseau vers une seconde valeur de tension réseau. La machine électrique tournante, capable de fonctionner en alternateur, recharge la batterie via un dispositif de régulation comportant notamment un convertisseur de puissance associé à un circuit de commande.

Typiquement, quand le moteur thermique du véhicule fonctionne, l'alternateur peut alimenter les consommateurs électriques et charger la batterie. Quand l'alternateur ne débite pas de courant, la batterie fournie toute l'énergie électrique dont le véhicule a besoin.

La fourniture d'énergie électrique par le système au réseau de distribution électrique diffère, dans sa valeur, en fonction de l'élément, batterie ou convertisseur, qui fournit l'énergie audit réseau.

D'une manière générale, la valeur de l'énergie fournie au réseau par la batterie est inférieure à la valeur de l'énergie fournie par la machine électrique tournante, à travers le convertisseur de puissance, qui délivre une tension de charge.

Ce convertisseur de puissance peut être modélisé par un interrupteur autorisant ou non la fourniture d'énergie de l'alternateur au réseau de distribution électrique, en fonction d'un profil de vitesse pré-établi et implanté dans le circuit de commande, ce profil de vitesse imposant notamment la commande dudit convertisseur de puissance.

Le profil de vitesse est généralement pré-établi en fonction de paramètres tels que le régime d'un moteur thermique du véhicule automobile, les températures ambiante et moteur, l'état de charge de la batterie, et les actions du conducteur du véhicule.

Ainsi, lorsque le convertisseur de puissance passe par exemple d'un état actif correspondant à un mode passant (alimentation énergétique du réseau via le convertisseur) à un état inactif correspondant à un mode bloqué (non alimentation énergétique du réseau via le convertisseur), ou inversement, la valeur de la tension de charge délivrée par le convertisseur varie instantanément.

En effet, le convertisseur de puissance suit une loi de commande de type échelon et donc opère en mode tout ou rien.

Il s'ensuit que la valeur de tension disponible sur le réseau de distribution électrique varie aussi instantanément entre deux valeurs de tension dudit réseau. Ces deux valeurs de tension réseau correspondent respectivement à la valeur de tension de charge délivrée par le convertisseur et à la valeur de tension de la batterie.

La variation instantanée de tension du réseau de distribution électrique peut présenter une amplitude élevée, par exemple de l'ordre d'environ 1 Volt à environ 4 Volts.

Cette brutale variation de tension, synonyme de fluctuation de l'énergie électrique disponible au niveau du réseau, engendre des effets négatifs sur l'environnement du système, par exemple au niveau de certains consommateurs.

Ces effets sont détectables par un utilisateur, notamment visuellement et auditivement.

Par exemple, ces effets peuvent être des variations détectables de luminosité des faisceaux lumineux issus des projecteurs du véhicule, ou d'un éclairage dans l'habitacle.

Ces effets négatifs peuvent aussi correspondrent à des perturbations électromagnétiques liées à ladite variation brutale d'énergie.

Ces variations brutales d'énergie peuvent donc être ressenties par un utilisateur du véhicule automobile et sont susceptibles d'altérer la sécurité et le confort de l'utilisateur.

En outre, ces inconvénients sont accentués par l'augmentation du nombre de consommateurs électriques embarqués dans le véhicule.

Il existe un besoin pour remédier aux inconvénients précités.
L'invention a ainsi pour objet un système micro-hybride pour véhicule automobile selon la revendication 1.

Conformément à l'invention, le système comporte un moyen associé au circuit de commande pour commander, lors d'un changement d'état entre des états de fourniture et de non fourniture du courant d'alimentation au réseau de distribution électrique, une variation au moins partiellement progressive d'une tension de charge délivrée par le convertisseur de puissance de manière à obtenir une variation correspondante d'une tension réseau du réseau de distribution électrique d'une première valeur de tension réseau vers une seconde valeur de tension réseau, une durée de ladite variation entre lesdites première et seconde valeurs de tension réseau étant déterminée de manière à supprimer un effet négatif dudit changement d'état sur l'environnement du système micro-hybride.

Avantageusement, le convertisseur n'agit pas en mode tout ou rien, mais autorise, grâce au moyen associé au circuit de commande, une variation au moins partiellement progressive de la tension réseau dudit réseau.

Ainsi, l'invention permet d'éliminer les effets négatifs détectables par l'utilisateur liés à des variations brutales de l'énergie sur le réseau de distribution électrique.

Le moyen associé peut être implanté au moins partiellement dans le circuit de commande.

La variation de la tension de charge peut intervenir pendant une durée déterminée en fonction des première et seconde valeurs de tension réseau.

En variante, ou en complément, la variation de la tension de charge peut comporter une pente déterminée en fonction des première et seconde valeurs de tension réseau.

En variante encore, la variation progressive de la tension de charge peut comporter une durée et/ou une pente qui est fonction de la valeur de courant présente aux bornes de la batterie.

En outre, la détermination d'un paramètre tel que le durée ou la pente peut être réalisée à partir d'informations contenues dans une base de données telles que la sensibilité de l'oeil quant à la détection d'une variation de luminosité, dans différentes conditions comme par exemple la nuit ou le jour (fluctuation du niveau de luminosité des projecteurs), mais aussi la sensibilité de l'oreille quant à la détection d'une variation de sonorité dans l'habitacle du véhicule automobile (fluctuation du niveau sonore d'un autoradio).

Encore en variante ou en complément, la variation de la tension de charge peut comporter une pente déterminée en fonction d'une information d'état énergétique représentative d'un état énergétique de l'unité de stockage d'énergie.

Le cas échéant, le système peut comprendre un module de gestion et de surveillance de l'unité de stockage d'énergie apte à déterminer l'information d'état énergétique de l'unité de stockage d'énergie.

Ces informations d'états énergétiques, correspondants à des états de charge, à des bilans énergétiques et à des états de santé, peuvent être obtenues à partir d'au moins un paramètre obtenu par ledit module de gestion et de surveillance. Ce paramètre peut être par exemple la température, la tension ou l'intensité de l'unité de stockage d'énergie.

Selon une caractéristique de l'invention, le module de gestion et de surveillance de l'unité de stockage d'énergie peut être implanté au moins partiellement dans le circuit de commande.

Lors du changement d'état de non fourniture vers l'état de fourniture du courant d'alimentation au réseau de distribution électrique, le moyen associé commande une variation au moins partiellement progressive de la tension de charge délivrée par le convertisseur de puissance de manière à obtenir une variation correspondante de la tension réseau du réseau de distribution électrique d'une première valeur de tension réseau correspondant à une valeur de tension présente aux bornes de l'unité de stockage d'énergie antérieurement audit changement d'état, vers une seconde valeur de tension du réseau correspondant à une valeur de tension de charge à délivrer par ledit convertisseur.

Lors du changement d'état de fourniture vers l'état de non fourniture du courant d'alimentation au réseau de distribution électrique, le moyen associé commande une variation au moins partiellement progressive de la tension de charge délivrée par le convertisseur de puissance de manière à obtenir une variation correspondante de la tension réseau du réseau de distribution électrique d'une première valeur de tension réseau correspondant à une valeur de tension de charge délivrée par ledit convertisseur antérieurement audit changement d'état, vers une seconde valeur de tension du réseau correspondant à une valeur de tension présente aux bornes de l'unité de stockage d'énergie.

Selon un mode de réalisation, le moyen associé comprend:
- un moyen pour obtenir une information de fourniture représentative de l'état de fourniture du courant d'alimentation au réseau de distribution électrique, cet état correspondant à un ordre d'activation du convertisseur de puissance,
- un moyen pour obtenir la valeur de tension présente aux bornes de l'unité de stockage d'énergie,
- un moyen pour obtenir la valeur de tension de charge à délivrer,
- un moyen pour commander l'activation du convertisseur de puissance, et
- un moyen pour commander la variation de la tension de charge du convertisseur de puissance, jusqu'à ce que la tension réseau ait une valeur égale à ladite valeur de tension de charge à délivrer.

En outre, le moyen associé comprend:
- un moyen pour obtenir une information de non fourniture représentative de l'état de non fourniture du courant d'alimentation au réseau de distribution électrique, cet état correspondant à un ordre de désactivation du convertisseur de puissance,
- un moyen pour obtenir la valeur de tension de charge délivrée par le convertisseur antérieurement audit changement d'état,
- un moyen pour obtenir la valeur de tension présente aux bornes de l'unité de stockage d'énergie,
- un moyen pour commander la variation de la tension de charge du convertisseur de puissance, jusqu'à ce que la tension réseau ait une valeur égale à ladite valeur de tension présente aux bornes de l'unité de stockage d'énergie, et
- un moyen pour commander la désactivation du convertisseur de puissance.

En variante, le moyen associé comprend:
- un moyen pour obtenir une information de non fourniture représentative de l'état de non fourniture du courant d'alimentation au réseau de distribution électrique, cet état correspondant à un ordre de désactivation du convertisseur de puissance,
- un moyen pour obtenir la valeur de tension de charge délivrée par le convertisseur antérieurement audit changement d'état,
- un moyen pour obtenir une valeur d'un courant présent aux bornes de l'unité de stockage d'énergie,
- un moyen pour commander la variation de la tension de charge du convertisseur de puissance, jusqu'à ce que le courant présent aux bornes de l'unité de stockage d'énergie ait une valeur sensiblement nulle, et
- un moyen pour commander la désactivation du convertisseur de puissance.

Dans cette variante, il n'est pas nécessaire d'obtenir une valeur de tension présente aux bornes de l'unité de stockage d'énergie qui peut réclamer d'être réalisée dans certaines conditions, notamment lorsque le système est dans un état de non fourniture du courant d'alimentation au réseau de distribution électrique.

Le système peut comporter des moyens de mesure, notamment des capteurs, pour déterminer l'une au moins des valeurs suivantes:
- une tension présente aux bornes de l'unité de stockage d'énergie,
- un courant présent aux bornes de l'unité de stockage d'énergie.

Les moyens de mesure peuvent être aptes à mesurer la tension aux bornes de l'unité de stockage d'énergie lorsque le système est dans un état de non fourniture du courant d'alimentation au réseau de distribution électrique.

Le moyen associé au circuit de commande obtient l'une au moins des valeurs de tension et de courant, la charge et la sauvegarde dans une mémoire.

Ladite mémoire peut être implantée dans le circuit de commande.

Les moyens de mesures, et notamment les capteurs, peuvent être implantés au moins partiellement dans le circuit de commande.

Les moyens de mesure peuvent aussi être implantés au moins partiellement à proximité de l'unité de stockage d'énergie de manière à éviter les erreurs de mesures. On peut alors procéder à une mesure de type différentielle, par exemple aux bornes de l'unité de stockage d'énergie.

Dans le cas de capteurs, ceux-ci peuvent être disposés directement sur l'unité de stockage d'énergie.

L'unité de stockage peut par exemple être composé d'une batterie, notamment de type au plomb, ou d'un super condensateur, ou d'une pluralité desdits composants.

En outre, les moyens de mesures peuvent avantageusement être implantés dans le module de gestion et de surveillance de l'unité de stockage d'énergie, ou associé audit module.

Selon une caractéristique de l'invention, une valeur de tension de charge peut être déterminée en fonction d'un profil de vitesse associé au système.

Selon une autre caractéristique de l'invention, les informations de fourniture et de non fourniture peuvent être déterminées en fonction du profil de vitesse associé au système.

Le profil de vitesse peut par exemple être associé au circuit de commande du système.

De préférence, ce profil de vitesse est déterminé en fonction notamment du régime d'un moteur thermique du véhicule automobile, des températures ambiante et moteur, d'au moins un état énergétique de l'unité de stockage d'énergie, et des actions du conducteur du véhicule.

Selon d'autres caractéristiques, le convertisseur de puissance peut comprendre l'un au moins d'un convertisseur alternatif-continu, réversible ou non, et d'un convertisseur de puissance continu-continu, réversible ou non.

La machine électrique tournante peut être un alterno-démarreur.

L'invention a aussi pour objet un véhicule automobile comportant un système tel que décrit précédemment.

D'autres caractéristiques et avantages de l'invention apparaîtront au cours de la lecture de la description détaillée qui suit pour la compréhension de laquelle on se reportera aux figures qu'elle comporte, parmi lesquelles:

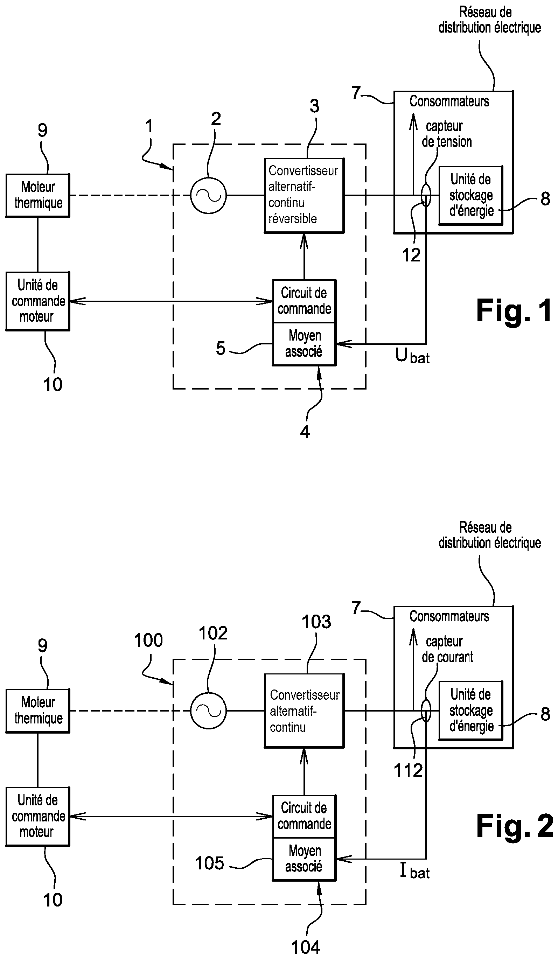

les figures 1 à 3 représentent, schématiquement et partiellement, des systèmes micro-hybrides conformes à trois modes de réalisation différents de l'invention.

On a représenté sur la figure 1 un système micro-hybride 1 comportant une machine électrique tournante réversible polyphasée 2, un convertisseur alternatif-continu 3 réversible, un circuit de commande 4, et un moyen 5 associé audit circuit de commande 4.

La machine électrique tournante réversible polyphasée 2 est formée, dans l'exemple considéré, par un alterno-démarreur de véhicule automobile.

L'alterno-démarreur 2 est capable, outre d'être entraîné en rotation par un moteur thermique 9 pour produire de l'énergie électrique (mode alternateur), de transmettre un couple à ce moteur thermique 9 pour un démarrage (mode démarreur).

L'alterno-démarreur 2, le convertisseur 3 et un réseau de distribution électrique 7 sont reliés en série.

Le réseau de distribution électrique 7 comporte une unité de stockage d'énergie 8

L'unité de stockage d'énergie 8 peut comprendre une batterie d'alimentation classique, par exemple de type batterie au plomb. Cette batterie 8 permet, outre d'alimenter l'alterno-démarreur durant une phase de démarrage (mode moteur), de fournir de l'énergie électrique à des consommateurs électriques du véhicule, par exemple des projecteurs, un autoradio, un dispositif de climatisation, des essuie-glaces.

Le convertisseur 3 autorise des transferts bidirectionnels d'énergie électrique entre l'alterno-démarreur 2 et la batterie 8, ces transferts étant notamment commandés par le circuit de commande 4 connectée au convertisseur 3.

Le circuit de commande 4 du système micro-hybride 1 peut être construit autour d'un microprocesseur.

Le microprocesseur 4 est relié à une unité de commande moteur 10 apte à gérer le moteur thermique 9.

L'unité de commande moteur 10 est apte à recevoir des informations représentatives d'un état du moteur 9, notamment via des moyens de mesures disposés notamment sur ledit moteur 9.

Ces informations correspondent à des paramètres tels que le régime du moteur 9, les températures ambiante et moteur, et les actions du conducteur du véhicule.

En fonction de ces paramètres, un profil de vitesse est établi, chargé et sauvegardé dans l'unité de commande moteur 10.

En variante, le profil de vitesse peut être pré-établi, chargé et sauvegardé dans l'unité de commande moteur 10.

Le profil de vitesse donne des ordres d'activation et de désactivation du convertisseur 3 au microprocesseur 4.

Ces ordres d'activation et de désactivation correspondent respectivement à des états de fourniture et de non fourniture du courant d'alimentation à la batterie 8.

L'ordre d'activation intervient lorsqu'apparaît notamment une phase de démarrage du moteur thermique, et à la suite d'une phase de non génération d'énergie électrique.

L'ordre de désactivation intervient lorsqu'apparaît notamment une phase d'arrêt du moteur thermique, ou lorsqu'une diminution de la vitesse de rotation du moteur thermique induit une phase de non génération d'énergie électrique.

On va maintenant décrire plus en détail le moyen 5 associé au microprocesseur 4 selon l'invention.

Dans l'exemple décrit, lorsque le convertisseur 3 ne permet pas la fourniture du courant d'alimentation à la batterie 8, le réseau de distribution électrique 7 présente alors une tension réseau égale à une tension aux bornes de la batterie 8.

Le moyen associé 5 obtient la tension aux bornes de la batterie 8 appelée Ubat.

La tension Ubat provient d'un capteur 12 relié au moyen 5.

Le capteur 12 est de préférence disposé à proximité de la batterie 8.

La tension Ubat est ensuite transmise au moyen 5 qui va la charger et la mémoriser dans une mémoire par exemple de type RAM ou EEPROM (respectivement "random access memory" et "electrically erasable programmable read only memory" en anglais).

Cette mémoire est de préférence implantée dans le moyen 5.

Si l'unité de commande moteur 10 envoie un ordre d'activation du convertisseur 3 au moyen 5, alors le moyen 5 obtient une tension de charge à délivrer par le convertisseur 3 appelée Uc.

La tension de charge Uc est une tension de consigne déterminée par le microprocesseur 4 en fonction de paramètres pouvant provenir de l'unité de commande moteur 10, et notamment du profil de vitesse que comporte cette unité 10.

La tension de charge Uc est en outre déterminée en fonction de l'énergie électrique délivrée par l'alterno-démarreur 2 lorsqu'il fonctionne en mode alternateur et des besoins en énergie qu'a le réseau de distribution électrique 7.

Par exemple, la tension Uc peut être lue dans une table de consultation mémorisée dans le microprocesseur 4, cette table de consultation contenant une pluralité de valeurs de tension de charge associées à différents paramètres tels que le rapport cyclique et la température de l'alterno-démarreur 2.

La tension Uc est chargée puis mémorisée dans une mémoire du moyen 5.

Le moyen 5 commande l'activation du convertisseur 3 et lui impose une variation progressive de la tension Uc délivrée par ledit convertisseur 3.

Cette variation progressive est fonction d'une durée déterminée par le moyen 5 en fonction des tensions Ubat et Uc.

Dans l'exemple considéré, la durée est lue dans une table de consultation mémorisée dans le microprocesseur 4, cette table de consultation contenant une pluralité de valeurs de durée associées à différentes tensions Ubat et Uc prédéterminées.

Cette table est avantageusement réalisée en prenant en considération au moins un paramètre représentatif d'un effet négatif indiqué précédemment, cet effet apparaissant à cause de l'amplitude de la différence entre les tensions Ubat et Uc.

L'amplitude de la différence entre les tensions Ubat et Uc, qui peut être par exemple d'environ 1 Volt à environ 4 Volts correspond à l'amplitude de variation de la tension réseau.

Le paramètre permettant de déterminer la durée peut être représentatif de la sensibilité de l'oeil quant à la détection d'une variation de luminosité, dans différentes conditions comme par exemple la nuit ou le jour (fluctuation du niveau de luminosité des projecteurs), mais aussi de la sensibilité de l'oreille quant à la détection d'une variation de sonorité dans l'habitacle du véhicule automobile (fluctuation du niveau sonore d'un autoradio).

En variante, la durée peut être déterminée par le moyen 5, par exemple sans l'utilisation d'une table de consultation, grâce à un algorithme implémenté dans des moyens de calculs dudit moyen 5.

Si on le souhaite, il est possible de combiner un algorithme et une table de consultation.

Dans un autre exemple, la variation progressive est fonction d'une pente déterminée par le moyen 5 en fonction des tensions Ubat et Uc.

Encore dans un autre exemple, la variation progressive est fonction à la fois d'une durée et d'une pente qui sont fonction des tensions Ubat et Uc.

La détermination de la pente est avantageusement réalisée d'une manière similaire à celle de la durée.

Dans l'exemple considéré, le moyen 5 commande la variation progressive de la tension Uc du convertisseur de manière à obtenir une variation progressive correspondante d'une tension réseau du réseau de distribution électrique 7 jusqu'à ce que ladite tension réseau soit égale à la tension Uc.

Ainsi, il est possible de supprimer les effets négatifs sur l'environnement du système micro-hybride 1, ces effets étant engendrés par l'ordre d'activation du convertisseur 3, correspondant au changement d'état de non fourniture vers l'état de fourniture du courant d'alimentation au réseau de distribution électrique 7, et donc de la variation de la tension réseau.

Dans l'exemple décrit, lorsque le convertisseur 3 permet la fourniture du courant d'alimentation à la batterie 8, le réseau de distribution électrique 7 présente alors une tension réseau égale à la tension de charge Uc délivrée par le convertisseur 3.

Le moyen associé 5 obtient la tension Uc et la mémorise.

Si l'unité de commande moteur 10 envoie un ordre de désactivation du convertisseur 3 au moyen 5, alors ce moyen 5 obtient la tension Uc délivrée par le convertisseur 3.

La tension Uc est lue dans une table de consultation mémorisée dans le microprocesseur 4, cette table de consultation contenant une pluralité de valeurs de tension de charge associées à différents paramètres tels que le rapport cyclique et la température de l'alterno-démarreur 2.

La tension Uc est chargée puis mémorisée dans une mémoire du moyen 5.

Le moyen associé 5 a en mémoire la tension Ubat présente aux bornes de la batterie 8 antérieurement à l'activation du convertisseur 3.

Le moyen 5 impose une variation progressive de la tension Uc délivrée par ledit convertisseur 3, entre la tension Uc obtenue et la tension Ubat mémorisée.

La variation progressive est fonction d'une durée déterminée par le moyen 5 en fonction des tensions Ubat et Uc.

En variante, ou en complément, la variation progressive est fonction d'une pente déterminée par le moyen 5 en fonction des tensions Ubat et Uc.

Dans l'exemple considéré, la durée et/ou la pente sont lues dans des tables de consultation mémorisées dans le microprocesseur 4, cette table de consultation contenant une pluralité de valeur de durée et/ou de pente associées à différentes tensions Ubat et Uc prédéterminées.

En outre, la table est avantageusement réalisée en prenant en considération au moins un paramètre représentatif d'un effet négatif comme indiqué précédemment.

Le moyen 5 commande alors la variation progressive de la tension Uc du convertisseur de manière à obtenir une variation progressive correspondante d'une tension réseau du réseau de distribution électrique 7 jusqu'à ce que ladite tension réseau soit égale à la tension Ubat.

Le moyen 5 commande alors la désactivation du convertisseur 3.

Ainsi, il est possible de supprimer un effet négatif sur l'environnement du système micro-hybride, cet effet étant issu de l'ordre de désactivation du convertisseur 3, correspondant au changement d'état de fourniture vers l'état de non fourniture du courant d'alimentation au réseau de distribution électrique 7.

Dans l'exemple décrit à la figure 1, la variation de la tension de charge Uc est progressive.

En variante, la variation de la tension de charge Uc peut être partiellement progressive, dans les deux cas où l'ordre envoyé par l'unité de commande moteur 10 correspond à l'activation et à la désactivation du convertisseur 3.

En effet, les variations brutales d'énergie électrique disponible au niveau du réseau 7 engendrent des effets qui sont négatifs au sens de la présente invention dès lors que lesdits effets sont détectés par exemple par l'oeil ou l'oreille de l'utilisateur du véhicule.

La détection est définie ici comme étant la perception notamment par l'oeil ou l'oreille humaine de la variation.

Les effets négatifs peuvent également correspondrent à des perturbations électromagnétiques.

Le circuit de commande 4 peut donc commander la tension de charge Uc en imposant au convertisseur 3 une variation de ladite tension Uc présentant une première phase de type échelon, et une seconde phase progressive comme décrite dans l'exemple de la figure 1, ou inversement.

Dans chacun des systèmes micro-hybrides qui seront décrits ci-dessous, la variation de la tension de charge Uc peut être au moins partiellement progressive.

La figure 2 concerne un autre mode de réalisation d'un système micro-hybride 100.

Le système micro-hybride 100 comporte un alternateur classique 2 et un convertisseur de puissance 103 non réversible.

En variante, le système 100 peut comprendre un dispositif de démarrage (non représenté) associé à l'alternateur 102, en lieu et place de l'alterno-démarreur.

Le système 100 présente une architecture similaire à celle du système micro-hybride décrit à la figure 1, de son circuit de commande 104 et de son moyen associé 105.

Dans l'exemple décrit, lorsque le convertisseur 103 permet la fourniture du courant d'alimentation à la batterie 8, le réseau de distribution électrique 7 présente alors une tension réseau égale à la tension de charge Uc délivrée par le convertisseur 103.

Le moyen associé 105 obtient la tension Uc et la mémorise.

Si l'unité de commande moteur 10 envoie un ordre de désactivation du convertisseur 103 au moyen 105, alors ce moyen 105 obtient la tension Uc délivrée par le convertisseur 103.

La tension Uc est lue dans une table de consultation mémorisée dans le circuit de commande 104, cette table de consultation contenant une pluralité de valeurs de tension de charge associées à différents paramètres tels que le rapport cyclique et la température de l'alterno-démarreur 102.

La tension Uc est chargée puis mémorisée dans une mémoire du moyen 105.

Le moyen 105 obtient un courant aux bornes de la batterie 8 appelée Ibat.

Ce courant Ibat correspond au courant réseau présent sur le réseau 7.

Le courant Ibat provient d'un capteur 112 relié au moyen 105.

Le capteur 112 est de préférence disposé à proximité de la batterie 8.

Le courant Ibat est ensuite transmis au moyen 105 qui va charger la valeur d'intensité correspondante et mémoriser celle-ci.

Le moyen 105 impose une variation progressive de la tension Uc délivrée par ledit convertisseur 103, jusqu'à ce que le courant Ibat soit sensiblement nul.

La variation progressive est fonction d'une durée prédéterminée par le moyen 105.

En variante, ou en complément, la variation progressive est fonction d'une pente prédéterminée par le moyen 105.

Dans l'exemple considéré, la durée et/ou la pente peuvent être lues dans des tables de consultation mémorisées dans le microprocesseur 104, cette table de consultation contenant une pluralité de valeur de durée et/ou de pente associées notamment à différentes tensions Uc prédéterminées.

De préférence, la table est réalisée en prenant en considération au moins un paramètre représentatif d'un effet négatif comme indiqué précédemment.

Le moyen 105 commande alors la variation progressive de la tension Uc du convertisseur de manière à obtenir une variation progressive correspondante d'une tension réseau et d'un courant réseau du réseau 7 jusqu'à ce que ledit courant réseau soit sensiblement nul.

Le moyen 105 commande alors la désactivation du convertisseur 103.

Ainsi, il est possible de supprimer un effet négatif sur l'environnement du système micro-hybride, cet effet étant issu de l'ordre de désactivation du convertisseur 103, correspondant au changement d'état de fourniture vers l'état de non fourniture du courant d'alimentation au réseau de distribution électrique 7.

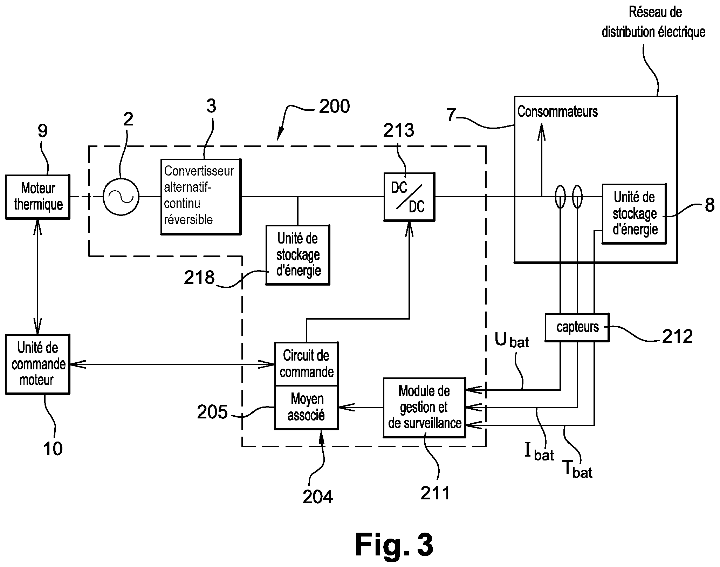

La figure 3 concerne encore un autre mode de réalisation d'un système micro-hybride 200.

Ce système 200 présente une architecture sensiblement différente du système micro-hybride décrit à la figure 1.

Le système micro-hybride 200 comprend, à la différence du système micro-hybride de la figure 1, une unité de stockage d'énergie 218 supplémentaire et un convertisseur de puissance 213 supplémentaire.

L'unité de stockage d'énergie 218 peut avantageusement comporter une pluralité de cellules capacitives de manière à former un super-condensateur, et le convertisseur de puissance 213 est de type continu-continu réversible.

Dans l'exemple décrit, l'alterno-démarreur 2 peut être utilisé dans une architecture de type à freinage récupératif, afin de transformer une partie de l'énergie mécanique issue d'un freinage en énergie électrique, grâce notamment au super-condensateur 218.

Un ordre de désactivation peut intervenir lorsqu'apparaît notamment une phase de freinage récupératif, en plus des phases indiquées précédemment.

Le convertisseur continu-continu 213 est connecté en série entre le convertisseur alternatif-continu 3 et la batterie 8.

Le super-condensateur 218 est connecté en parallèle entre les convertisseurs 213 et 3.

Le convertisseur 213 permet de délivrer, outre une tension normale issue de l'alterno-démarreur 2 fonctionnant en mode générateur, une tension élevée, par exemple une tension dite "flottante", au réseau de distribution électrique 7.

Cette tension élevée peut être issue directement de l'alterno-démarreur 2 fonctionnant en mode de récupération d'énergie lors d'un freinage, ou du super-condensateur 218.

Le système micro-hybride 200 comporte en outre un circuit de commande 204 pouvant être construit autour d'un microprocesseur connecté au convertisseur continu-continu 213 et un moyen 205 associé au microprocesseur 204.

Le système micro-hybride 200 comprend également un module de gestion et de surveillance 211 de la batterie 8 associé à des capteurs 212.

Le module 211 peut être implanté au moins partiellement dans le moyen 205.

En variante, le module 211 peut être implanté dans un moyen prévu pour recevoir les capteurs 212, ledit moyen pouvant être disposé à proximité de la batterie 8.

Le module 211 permet de déterminer l'état énergétique de la batterie 8, autrement dit la quantité d'énergie disponible au niveau de la batterie 8.

Cette quantité d'énergie peut être représentée par un état de charge de la batterie 8 ("state of charge" en anglais), ou par un bilan énergétique ("charge balance" en anglais) déterminé en fonction d'un courant délivré par la batterie 8.

Le bilan énergétique est déterminé par une somme d'une quantité d'énergie entrante et d'une quantité d'énergie sortante. Ces quantités d'énergie correspondent à une intégration du courant Ibat délivré par la batterie 8. En outre, un coefficient, appelé coefficient d'efficacité, peut être affecté à au moins une quantité d'énergie.

Le module 211 peut aussi être capable de déterminer l'état de santé de la batterie 8 ("state of health" en anglais).

Ces informations d'état énergétique de la batterie 8 sont obtenus à partir d'au moins un paramètre obtenu par le module 212.

De préférence, ce paramètre peut être la température de la batterie 8, le courant ou la tension aux bornes de la batterie 8.

Dans l'exemple décrit, lorsque le convertisseur 213 ne permet pas la fourniture du courant d'alimentation à la batterie 8, le réseau 7 présente alors une tension réseau égale à une tension aux bornes de la batterie 8.

Le module 211 obtient la tension Ubat aux bornes de la batterie 8.

La tension Ubat provient d'un capteur 12 relié au module 211.

La tension Ubat est ensuite transmise au moyen 205 qui va charger la valeur de tension correspondante et mémoriser celle-ci dans une mémoire dudit moyen 205.

Si l'unité de commande moteur 10 envoie un ordre d'activation du convertisseur 213 au moyen 205, alors le moyen 205 obtient une tension de charge Uc à délivrer par le convertisseur 213.

La tension Uc est déterminée par le microprocesseur 204 en fonction de paramètres pouvant provenir du profil de vitesse implanté dans l'unité de commande moteur 10, en fonction également de l'énergie électrique délivrée par l'alterno-démarreur 2 lorsqu'il fonctionne en mode alternateur et des besoins en énergie qu'a le réseau de distribution électrique 7.

La tension Uc peut être lue dans une table de consultation mémorisée dans le microprocesseur 204, cette table de consultation contenant une pluralité de valeurs de tension de charge associées à différents paramètres tels que le rapport cyclique et la température de l'alterno-démarreur 2.

Dans l'exemple décrit, la tension Uc peut en outre être déterminée en fonction d'une tension disponible aux bornes du super-condensateur 218.

La tension Uc est chargée puis mémorisée dans une mémoire du moyen 205.

Le moyen 205 commande l'activation du convertisseur 213 et lui impose une variation progressive de la tension Uc délivrée par ledit convertisseur 213.

Cette variation progressive est fonction d'une pente déterminée par le moyen 205 en fonction notamment des tensions Ubat et Uc, et d'un état énergétique de la batterie 8.

La pente peut être lue dans une table de consultation mémorisée dans le microprocesseur 204, cette table de consultation contenant une pluralité de valeurs de pente associées à différentes tensions Ubat et Uc prédéterminées, et à des valeurs d'état de charge ou de bilan énergétique prédéterminées.

La table est avantageusement réalisée en prenant en considération au moins un paramètre représentatif d'un effet négatif indiqué précédemment, cet effet apparaissant à cause de l'amplitude de la différence entre les tensions Ubat et Uc.

Dans l'exemple de la figure, l'amplitude de la différence entre les tensions Ubat et Uc, qui peut être par exemple d'environ 1 Volt à environ 5 Volts, correspond à l'amplitude de variation de la tension réseau.

Le paramètre permettant de déterminer la pente peut par exemple être représentatif, comme indiqué précédemment, de la sensibilité de l'oeil et/ou de la sensibilité de l'oreille.

En variante, la pente peut être déterminée par le moyen 205, grâce à un algorithme implémenté dans des moyens de calcul dudit moyen 205, avec ou sans l'utilisation d'une table de consultation.

Dans ce cas, le module 211 obtient notamment au moins un des paramètres parmi la tension Ubat, le courant Ibat et la température Ibat.

Le module 211 détermine une valeur d'état de charge ou de bilan énergétique et la transmet au moyen 205.

La variation progressive peut également être fonction d'une durée déterminée par le moyen 205 en fonction des tensions Ubat et Uc, et d'un état énergétique de la batterie.

La détermination de la durée est avantageusement réalisée d'une manière similaire à celle de la pente.

Bien entendu, la détermination de la durée et/ou de la pente est possible sans l'état énergétique de la batterie 8.

Dans l'exemple considéré, le moyen 205 commande la variation progressive de la tension Uc du convertisseur de manière à obtenir une variation progressive correspondante d'une tension réseau du réseau de distribution électrique 7 jusqu'à ce que ladite tension réseau soit égale à la tension Uc.

Ainsi, il est possible de supprimer les effets négatifs sur l'environnement du système micro-hybride 200, ces effets étant engendrés par l'ordre d'activation du convertisseur 213, correspondant au changement d'état de non fourniture vers l'état de fourniture du courant d'alimentation au réseau de distribution électrique 7, et donc de la variation de la tension réseau.

Dans l'exemple décrit, lorsque le convertisseur 213 permet la fourniture du courant d'alimentation à la batterie 8, le réseau de distribution électrique 7 présente alors une tension réseau égale à la tension de charge Uc délivrée par le convertisseur 213.

Le moyen associé 5 obtient la tension Uc et la mémorise.

Si l'unité de commande moteur 10 envoie un ordre de désactivation du convertisseur 213 au moyen 205, alors ce moyen 205 obtient la tension Uc délivrée par le convertisseur 213.

La tension Uc peut être lue dans une table de consultation mémorisée dans le microprocesseur 204, cette table de consultation contenant une pluralité de valeurs de tension de charge associées à différents paramètres tels que le rapport cyclique et la température de l'alterno-démarreur 200.

La tension Uc peut en outre être déterminée en fonction d'une tension disponible aux bornes du super-condensateur 218.

La tension Uc est chargée puis mémorisée dans une mémoire du moyen 205.

Le moyen associé 205 a en mémoire la tension Ubat présente aux bornes de la batterie 8 antérieurement à l'activation du convertisseur 3.

En variante, le module 212 est capable d'obtenir la tension Ubat aux bornes de la batterie 8 lorsque le convertisseur 213 permet la fourniture du courant d'alimentation au réseau 7.

Le cas échéant, la tension Ubat est ensuite transmise au moyen 205 qui la charge et la mémorise.

Le moyen 205 impose une variation progressive de la tension Uc délivrée par le convertisseur 213, entre les tensions Uc et Ubat.

La variation progressive est fonction d'une pente déterminée par le moyen 205 en fonction des tensions Ubat et Uc, et de l'état de charge ou du bilan énergétique de la batterie 8.

En complément, la variation progressive peut être fonction d'une durée limite déterminée par le moyen 205 en fonction des tensions Ubat et Uc, et de l'état de charge ou du bilan énergétique de la batterie 8.

Dans l'exemple considéré, la pente et/ou la durée sont lues dans des tables de consultation mémorisées dans le microprocesseur 204.

En outre, la table est avantageusement réalisée en prenant en considération au moins un paramètre représentatif d'un effet négatif comme indiqué précédemment.

Le moyen 205 commande alors la variation progressive de la tension Uc du convertisseur de manière à obtenir une variation progressive correspondante d'une tension réseau du réseau de distribution électrique 7 jusqu'à ce que ladite tension réseau soit égale à la tension Ubat.

Le moyen 205 commande alors la désactivation du convertisseur 213.

Ainsi, il est possible de supprimer un effet négatif sur l'environnement du système micro-hybride, cet effet étant issu de l'ordre de désactivation du convertisseur 213, correspondant au changement d'état de fourniture vers l'état de non fourniture du courant d'alimentation au réseau de distribution électrique 7.

Le système micro-hybride 200 de la figure 3 et son fonctionnement qui vient d'être décrit est applicable à un système micro-hybride ne permettant pas un fonctionnement en freinage récupératif, ou ne comprenant pas de super-condensateur.

Dans un autre mode de réalisation de l'invention non représenté, le système micro-hybride peut comporter, à la différence du système micro-hybride décrit à la figure 3, un ensemble comprenant un convertisseur continu-continu réversible et un super-condensateur montés en série, cet ensemble étant connecté en parallèle entre le convertisseur alternatif-continu et la batterie.

Le lecteur est invité à se référer à la demande de brevet N° FR 2 903 048.

Dans ce cas, le circuit de commande est apte à commander à la fois le convertisseur alternatif-continu et le convertisseur continu-continu.

En outre, lorsque l'état de non fourniture du réseau est ordonné, cela signifie que les deux convertisseurs doivent être désactivés, et donc que la commande de variation au moins partiellement progressive de la tension de charge est susceptible d'être appliquée sur chacun des convertisseurs.

Bien sûr, si un seul des convertisseurs est activé, alors la commande de variation progressive ne s'applique que sur ledit convertisseur activé.

## Revendications

1. Système micro-hybride pour véhicule automobile (1, 100, 200) comportant:
- une machine électrique tournante (2, 102),
- au moins un convertisseur de puissance (3, 103, 213) apte à être connecté à un réseau de distribution électrique (7) du véhicule, ce réseau comportant une unité de stockage d'énergie (8),
- un circuit de commande (4, 104, 204) apte à commander le convertisseur de puissance (3, 103, 213) pour fournir un courant d'alimentation au réseau de distribution électrique (8),
**caractérisé en ce qu'**il comporte un moyen associé (5, 105, 205) au circuit de commande (4, 104, 204) qui, lors d'un changement d'état entre un état de non-fourniture et de un état de fourniture du courant d'alimentation au réseau de distribution électrique (7), commande une variation au moins partiellement progressive de la tension de charge délivrée par le convertisseur de puissance (3, 203, 213) de manière à obtenir une variation correspondante de la tension réseau du réseau de distribution électrique (7) d'une première valeur de tension réseau correspondant à une valeur de tension présente aux bornes de l'unité de stockage d'énergie (8) antérieurement audit changement d'état, vers une seconde valeur de tension du réseau correspondant à une valeur de tension de charge à délivrer par ledit convertisseur, ledit moyen associé comprenant :
- un moyen pour obtenir une information de fourniture représenative de l'état de fourniture du courant d'alimentation au réseau de distribution électrique (7), cet état correspondant à un ordre d'activation du convertisseur de puissance (3, 103, 213),
- un moyen pour obtenir la valeur de tension présente aux bornes de l'unité de stockage d'énergie (8),
- un moyen pour obtenir la valeur de tension de charge à délivrer,
- un moyen pour commander l'activation du convertisseur de puissance (3, 103, 213), et
- un moyen pour commander la variation de la tension de charge du convertisseur de puissance (3, 103, 213), jusqu'à ce que la tension réseau ait une valeur égale à ladite valeur de tension de charge à délivrer.

2. Système selon la revendication 1, **caractérisé en ce que** lors d'un changement d'état de fourniture vers l'état de non fourniture du courant d'alimentation au réseau de distribution électrique (7), le moyen associé (5, 105, 205) commande une variation au moins partiellement progressive de la tension de charge délivrée par le convertisseur de puissance (3, 103, 213) de manière à obtenir une variation correspondante de la tension réseau du réseau de distribution électrique d'une première valeur de tension réseau correspondant à une valeur de tension de charge délivrée par ledit convertisseur antérieurement audit changement d'état, vers une seconde valeur de tension du réseau correspondant à une valeur de tension présente aux bornes de l'unité de stockage d'énergie (8), le moyen associé (5, 105, 205) comprenant :
- un moyen pour obtenir une information de non fourniture représentative de l'état de non fourniture du courant d'alimentation au réseau de distribution électrique (7), cet état correspondant à un ordre de désactivation du convertisseur de puissance (3, 103, 213),
- un moyen pour obtenir la valeur de tension de charge délivrée par le convertisseur antérieurement audit changement d'état,
- un moyen pour obtenir la valeur de tension présente aux bornes de l'unité de stockage d'énergie (8),
- un moyen pour commander la variation de la tension de charge du convertisseur de puissance (3, 103, 213), jusqu'à ce que la tension réseau ait une valeur égale à ladite valeur de tension présente aux bornes de l'unité de stockage d'énergie (8), et
- un moyen pour commander la désactivation du convertisseur de puissance (3, 103, 213).

3. Système selon la revendication 1 **caractérisé en ce que** lors d'un changement d'état de fourniture vers l'état de non fourniture du courant d'alimentation au réseau de distribution électrique (7), le moyen associé (5, 105, 205) commande une variation au moins partiellement progressive de la tension de charge délivrée par le convertisseur de puissance (3, 103, 213) de manière à obtenir une variation correspondante de la tension réseau du réseau de distribution électrique (7) d'une première valeur de tension réseau correspondant à une valeur de tension de charge délivrée par ledit convertisseur antérieurement audit changement d'état, vers une seconde valeur de tension du réseau correspondant à une valeur de tension présente aux bornes de l'unité de stockage d'énergie (8), le moyen associé (5, 105, 205) comprenant :
- un moyen pour obtenir une information de non fourniture représentative de l'état de non fourniture du courant d'alimentation au réseau de distribution électrique (7), cet état correspondant à un ordre de désactivation du convertisseur de puissance (3, 103, 213),
- un moyen pour obtenir la valeur de tension de charge délivrée par le convertisseur antérieurement audit changement d'état,
- un moyen pour obtenir une valeur d'un courant présent aux bornes de l'unité de stockage d'énergie (8),
- un moyen pour commander la variation de la tension de charge du convertisseur de puissance (3, 103, 213), jusqu'à ce que le courant présent aux bornes de l'unité de stockage d'énergie (8) ait une valeur sensiblement nulle, et
- un moyen pour commander la désactivation du convertisseur de puissance (3, 103, 213).

4. Système selon l'une quelconque des revendications précédentes, **caractérisé en ce que** la variation de la tension de charge comporte une pente déterminée en fonction d'une information d'état énergétique représentative d'un état énergétique de l'unité de stockage d'énergie (8), et **en ce qu'**il comprend un module de gestion et de surveillance de l'unité de stockage d'énergie (8) apte à déterminer l'information d'état énergétique de l'unité de stockage d'énergie (8).

5. Système selon la revendication précédente, **caractérisé en ce que** le module de gestion et de surveillance de l'unité de stockage d'énergie (8) est implanté au moins partiellement dans le circuit de commande (4, 104, 204).

6. Système selon l'une quelconque des revendications précédentes, **caractérisé en ce que** le moyen associé (5, 105, 205) est implanté au moins partiellement dans le circuit de commande (4, 104, 204).

7. Système selon l'une quelconque des revendications précédentes, **caractérisé en ce qu'**il comporte des moyens de mesures, notamment des capteurs, pour déterminer l'une au moins des valeurs suivantes:
- une tension présente aux bornes de l'unité de stockage d'énergie (8),
- un courant présent aux bornes de l'unité de stockage d'énergie (8).

8. Système selon la revendication précédente, **caractérisé en ce que** les moyens de mesures mesurent une valeur de tension de l'unité de stockage d'énergie (8) lorsque le système est dans un état de non fourniture du courant d'alimentation au réseau de distribution électrique (7).

9. Système selon l'une quelconque des revendications précédentes, **caractérisé en ce que** le moyen associé (5, 105, 205) commande la valeur de tension de charge en fonction d'un profil de vitesse associé au système.

10. Système selon l'une quelconque des revendications 1 à 8, **caractérisé en ce que** le moyen associé (5, 105, 205) obtient les informations de fourniture et de non fourniture, ces informations étant déterminées en fonction d'un profil de vitesse associé au système.

11. Système selon l'une quelconque des revendications précédentes, **caractérisé en ce que** le convertisseur de puissance est un convertisseur alternatif-continu, réversible ou non (3, 103).

12. Système selon l'une quelconque des revendications précédentes, **caractérisé en ce que** le convertisseur de puissance est un convertisseur continu-continu, réversible ou non (3, 103).

13. Système selon l'une quelconque des revendications précédentes, **caractérisé en ce que** la machine électrique tournante (2, 102) est un alterno-démarreur.

14. Véhicule automobile comportant un système selon l'une quelconque des revendications 1 à 13.

## Patentansprüche

1. Mikro-Hybrid-System (1, 100, 200) für ein Kraftfahrzeug, das aufweist:
- eine drehende elektrische Maschine (2, 102),
- mindestens einen Leistungswandler (3, 103, 213), der mit einem elektrischen Verteilernetz (7) des Fahrzeugs verbunden werden kann, wobei dieses Netz eine Energiespeichereinheit (8) aufweist,
- einen Steuerschaltkreis (4, 104, 204), der den Leistungswandler (3, 103, 213) steuern kann, um einen Speisestrom an das elektrische Verteilernetz (8) zu liefern,
**dadurch gekennzeichnet, dass** es eine dem Steuerschaltkreis (4, 104, 204) zugeordnete Einrichtung (5, 105, 205) aufweist, die bei einer Zustandsänderung zwischen einem Zustand des Nichtlieferns und einem Zustand des Lieferns des Speisestroms an das elektrisches Verteilernetz (7) eine zumindest teilweise progressive Änderung der vom Leistungswandler (3, 203, 213) ausgegebenen Ladespannung steuert, um eine entsprechende Änderung der Netzspannung des elektrischen Verteilernetzes (7) von einem ersten Spannungswert, der an den Klemmen der Energiespeichereinheit (8) vor der Zustandsänderung vorhanden ist, zu einem zweiten Spannungswert des Netzes zu erhalten, der einem Wert einer vom Wandler auszugebenden Ladespannung entspricht,
wobei die zugeordnete Einrichtung enthält:
- eine Einrichtung, um eine Lieferinformation zu erhalten, die für den Lieferzustand des Speisestroms an das elektrische Verteilernetz (7) repräsentativ ist, wobei dieser Zustand einem Aktivierungsbefehl des Leistungswandlers, *, 103, 213) entspricht,
- eine Einrichtung, um den an den Klemmen der Energiespeichereinheit (8) vorhandenen Spannungswert zu erhalten,
- eine Einrichtung, um den auszugebenden Ladespannungswert zu erhalten,
- eine Einrichtung, um die Aktivierung des Leistungswandlers (3, 103, 213) zu steuern, und
- eine Einrichtung, um die Änderung der Ladespannung des Leistungswandlers (3, 103, 213) zu steuern, bis die Netzspannung einen Wert gleich dem auszugebenden Ladespannungswert hat.

2. System nach Anspruch 1, **dadurch gekennzeichnet, dass** bei einer Liefer-Zustandsänderung zum Zustand des Nichtlieferns des Speisestroms an das elektrische Verteilernetz (7) die zugeordnete Einrichtung (5, 105, 205) eine zumindest teilweise progressive Änderung der vom Leistungswandler (3, 103, 213) ausgegebenen Ladespannung steuert, um eine entsprechende Änderung der Netzspannung des elektrischen Verteilernetzes von einem ersten Netzspannungswert entsprechend einem vom Wandler vor der Zustandsänderung ausgegebenen Ladespannungswert zu einem zweiten Spannungswert des Netzes entsprechend einem an den Klemmen der Energiespeichereinheit (8) vorhandenen Spannungswert zu erhalten, wobei die zugeordnete Einrichtung (5, 105, 205) enthält:
- eine Einrichtung, um eine Nichtliefer-Information zu erhalten, die für den Zustand des Nichtlieferns des Speisestroms an das elektrische Verteilernetz (7) repräsentativ ist, wobei dieser Zustand einem Deaktivierungsbefehl des Leistungswandlers (3, 103, 213) entspricht,
- eine Einrichtung, um den vom Wandler vor der Zustandsänderung ausgegebenen Ladespannungswert zu erhalten,
- eine Einrichtung, um den an den Klemmen der Energiespeichereinheit (8) vorhandenen Spannungswert zu erhalten,
- eine Einrichtung, um die Änderung der Ladespannung des Leistungswandlers (3, 103, 203) zu steuern, bis die Netzspannung einen Wert gleich dem an den Klemmen der Energiespeichereinheit (8) vorhandenen Spannungswert hat, und
- eine Einrichtung, um die Deaktivierung des Leistungswandlers (3, 103, 2013) zu steuern.

3. System nach Anspruch 1, **dadurch gekennzeichnet, dass** bei einer Liefer-Zustandsänderung zum Zustand des Nichtlieferns des Speisestroms an das elektrische Verteilernetz (7) die zugeordnete Einrichtung (5, 105, 205) eine zumindest teilweise progressive Änderung der vom Leistungswandler (3, 103, 213) ausgegebenen Ladespannung steuert, um eine entsprechende Änderung der Netzspannung des elektrischen Verteilernetzes (7) von einem ersten Netzspannungswert entsprechend einem vom Wandler vor der Zustandsänderung ausgegebenen Ladespannungswert zu einem zweiten Spannungswert des Netzes zu erhalten, der einem an den Klemmen der Energiespeichereinheit (8) vorhandenen Spannungswert entspricht, wobei die zugeordnete Einrichtung enthält:
- eine Einrichtung, um eine Information der Nichtlieferung zu erhalten, die für den Zustand des Nichtlieferns des Speisestroms an das elektrische Verteilernetz (7) repräsentativ ist, wobei dieser Zustand einem Deaktivierungsbefehl des Leistungswandlers (3, 103, 213) entspricht,
- eine Einrichtung, um den vom Wandler vor der Zustandsänderung ausgegebenen Ladespannungswert zu erhalten,
- eine Einrichtung, um einen Wert eines Stroms zu erhalten, der an den Klemmen der Energiespeichereinheit (8) vorhanden ist,
- eine Einrichtung, um die Änderung der Ladespannung des Leistungswandlers (3, 103, 213) zu steuern, bis der an den Klemmen der Energiespeichereinheit (8) vorhandene Strom einen Wert im Wesentlichen gleich Null hat, und
- eine Einrichtung, um die Deaktivierung des Leistungswandlers (3, 103, 213) zu steuern.

4. System nach einem der vorhergehenden Ansprüche, **dadurch gekennzeichnet, dass** die Änderung der Ladespannung eine abhängig von einer für einen energetischen Zustand der Energiespeichereinheit (8) repräsentativen Energiezustandsinformation bestimmte Steigung hat, und dass es ein Verwaltungs- und Überwachungsmodul der Energiespeichereinheit (8) enthält, das die Energiezustandsinformation der Energiespeichereinheit (8) bestimmen kann.

5. System nach dem vorhergehenden Anspruch, **dadurch gekennzeichnet, dass** das Verwaltungs- und Überwachungsmodul der Energiespeichereinheit (8) zumindest teilweise in den Steuerschaltkreis (4, 104, 204) eingebaut ist.

6. System nach einem der vorhergehenden Ansprüche, **dadurch gekennzeichnet, dass** die zugeordnete Einrichtung (5, 105, 205) zumindest teilweise in den Steuerschaltkreis (4, 104, 204) eingebaut ist.

7. System nach einem der vorhergehenden Ansprüche, **dadurch gekennzeichnet, dass** es Messeinrichtungen, insbesondere Sensoren, aufweist, um mindestens einen der folgenden Werte zu bestimmen:
- eine an den Klemmen der Energiespeichereinheit (8) vorhandene Spannung,
- einen an den Klemmen der Energiespeichereinheit (8) vorhandenen Strom.

8. System nach dem vorhergehenden Anspruch, **dadurch gekennzeichnet, dass** die Messeinrichtungen einen Spannungswert der Energiespeichereinheit (8) messen, wenn das System in einem Zustand des Nichtlieferns des Speisestroms an das elektrische Verteilernetz (7) ist.

9. System nach einem der vorhergehenden Ansprüche, **dadurch gekennzeichnet, dass** die zugeordnete Einrichtung (5, 105, 205) den Ladespannungswert abhängig von einem dem System zugeordneten Geschwindigkeitsprofil steuert.

10. System nach einem der Ansprüche 1 bis 8, **dadurch gekennzeichnet, dass** die zugeordnete Einrichtung (5, 105, 205) die Liefer- und Nichtlieferinformationen erhält, wobei diese Informationen abhängig von einem dem System zugeordneten Geschwindigkeitsprofil bestimmt werden.

11. System nach einem der vorhergehenden Ansprüche, **dadurch gekennzeichnet, dass** der Leistungswandler ein umkehrbarer oder nicht umkehrbarer Wechselstrom-Gleichstrom-Wandler (3, 103) ist.

12. System nach einem der vorhergehenden Ansprüche, **dadurch gekennzeichnet, dass** der Leistungswandler ein umkehrbarer oder nicht umkehrbarer Gleichstrom-Gleichstrom-Wandler (213) ist.

13. System nach einem der vorhergehenden Ansprüche, **dadurch gekennzeichnet, dass** die drehende elektrische Maschine (2, 102) ein Starter-Generator ist.

14. Kraftfahrzeug, das ein System nach einem der Ansprüche 1 bis 13 aufweist.

## Claims

1. Micro-hybrid system for an automotive vehicle (1, 100, 200) comprising:
- a rotating electric machine (2, 102);
- at least one power converter (3, 103, 213) capable of being connected to an electricity distribution network (7) of the vehicle, this network comprising a power storage unit (8);
- a control circuit (4, 104, 204) capable of controlling the power converter (3, 103, 213) so as to deliver a supply current to the electricity distribution network (8),
**characterized in that** it comprises a means (5, 105, 205) associated with the control circuit (4, 104, 204) that, when changing state between a state of not delivering and a state of delivering the supply current to the electricity distribution network (7), controls an at least partially gradual variation in the charging voltage delivered by the power converter (3, 203, 213) so as to obtain a corresponding variation in the network voltage of the electricity distribution network (7) from a first network voltage value corresponding to a voltage value present across the terminals of the power storage unit (8) prior to said change of state, to a second voltage value of the network corresponding to a charging voltage value to be delivered by said converter, said associated means comprising:
- a means for obtaining delivery information representative of the state of delivering the supply current to the electricity distribution network (7), this state corresponding to an order to activate the power converter ,*, 103, 213);
- a means for obtaining the voltage value present across the terminals of the power storage unit (8);
- a means for obtaining the charging voltage value to be delivered;
- a means for controlling the activation of the power converter (3, 103, 213); and
- a means for controlling the variation in the charging voltage of the power converter (3, 103, 213) until the value of the network voltage is equal to said charging voltage value to be delivered.

2. System according to Claim 1, **characterized in that**, when changing state from a state of delivering to a state of not delivering the supply current to the electricity distribution network (7), the associated means (5, 105, 205) controls an at least partially gradual variation in the charging voltage delivered by the power converter (3, 103, 213) so as to obtain a corresponding variation in the network voltage of the electricity distribution network from a first network voltage value corresponding to a charging voltage value delivered by said converter prior to said change of state, to a second voltage value of the network corresponding to a voltage value present across the terminals of the power storage unit (8), the associated means (5, 105, 205) comprising:
- a means for obtaining non-delivery information representative of the state of not delivering the supply current to the electricity distribution network (7), this state corresponding to an order to deactivate the power converter (3, 103, 213);
- a means for obtaining the charging voltage value delivered by the converter prior to said change of state;
- a means for obtaining the voltage value present across the terminals of the power storage unit (8);
- a means for controlling the variation in the charging voltage of the power converter (3, 103, 213) until the value of the network voltage is equal to said voltage value present across the terminals of the power storage unit (8); and
- a means for controlling the deactivation of the power converter (3, 103, 213).

3. System according to Claim 1, **characterized in that**, when changing state from a state of delivering to a state of not delivering the supply current to the electricity distribution network (7), the associated means (5, 105, 205) controls an at least partially gradual variation in the charging voltage delivered by the power converter (3, 103, 213) so as to obtain a corresponding variation in the network voltage of the electricity distribution network from a first network voltage value corresponding to a charging voltage value delivered by said converter prior to said change of state, to a second voltage value of the network corresponding to a voltage value present across the terminals of the power storage unit (8), the associated means comprising:
- a means for obtaining non-delivery information representative of the state of not delivering the supply current to the electricity distribution network (7), this state corresponding to an order to deactivate the power converter (3, 103, 213);
- a means for obtaining the charging voltage value delivered by the converter prior to said change of state;
- a means for obtaining a value of a current present at the terminals of the power storage unit (8);
- a means for controlling the variation in the charging voltage of the power converter (3, 103, 213) until the value of the current present at the terminals of the power storage unit (8) is substantially zero; and
- a means for controlling the deactivation of the power converter (3, 103, 213).

4. System according to any one of the preceding claims, **characterized in that** the variation in the charging voltage includes a slope determined as a function of energy state information representative of an energy state of the power storage unit (8), and **in that** it comprises a module for managing and monitoring the power storage unit (8) capable of determining the information on the energy state of the power storage unit (8).

5. System according to the preceding claim, **characterized in that** the module for managing and monitoring the power storage unit (8) is at least partially embedded within the control circuit (4, 104, 204).

6. System according to any one of the preceding claims, **characterized in that** the associated means (5, 105, 205) is at least partially embedded within the control circuit (4, 104, 204).

7. System according to any one of the preceding claims, **characterized in that** it comprises measurement means, in particular sensors, for determining at least one of the following values:
- a voltage present across the terminals of the power storage unit (8);
- a current present at the terminals of the power storage unit (8).

8. System according to the preceding claim, **characterized in that** the measurement means measure a voltage value of the power storage unit (8) when the system is in a state of not delivering the supply current to the electricity distribution network (7).

9. System according to any one of the preceding claims, **characterized in that** the associated means (5, 105, 205) controls the charging voltage value as a function of a velocity profile associated with the system.

10. System according to any one of Claims 1 to 8, **characterized in that** the associated means (5, 105, 205) obtain the delivery and non-delivery information, this information being determined as a function of a velocity profile associated with the system.

11. System according to any one of the preceding claims, **characterized in that** the power converter is an AC-DC power converter (3, 103), which may or may not be reversible.

12. System according to any one of the preceding claims, **characterized in that** the power converter is a DC-DC power converter (213), which may or may not be reversible.

13. System according to any one of the preceding claims, **characterized in that** the rotating electric machine (2, 102) is a starter motor.

14. Automotive vehicle including a system according to any one of Claims 1 to 13.
